# EUROPEAN PATENT SPECIFICATION

(11) **EP 1 100 356 B1**
(45) Date of publication and mention of the grant of the patent: **08.03.2006**
(21) Application number: 99931443.8
(22) Date of filing: 02.06.1999
(51) Int. Cl.: A47C 1/00, A47B 1/00

(54) **PROCESS OF PREPARING FURNITURE AND DECORATIVE ITEMS**
VERFAHREN ZUM HERSTELLEN VON MÖBELN UND DEKORATIVEN GEGENSTÄNDEN
PROCEDE DE PREPARATION DE MEUBLES ET D'ARTICLES DECORATIFS

(30) Priority: 31.07.1998 IN DE224098
(43) Date of publication of application: 23.05.2001
(73) Proprietor: Anand, Rama, Lane No. 13, New Delhi 110 062 (IN)
(72) Inventor: Anand, Rama, Lane No. 13, New Delhi 110 062 (IN)
(74) Representative: Rees, Alexander Ellison
(86) International application number: PCT/IN1999/000021
(87) International publication number: WO 2000/005995

(56) References cited:
- DE-C- 923 991
- US-A- 3 125 377
- US-A- 4 099 771
- US-A- 4 785 577
- US-A- 5 338 097

## Description

### Field of the Invention

This invention relates to a process for preparing furniture and decorative item furniture prepared from tire and tube wastes.

### Background

Traditionally, furniture, for instance, beds, chairs and tables are made from wood. But presently, wood is very expensive and with a view to conserve and maintain forests for future generations health, its morally wrong to use this commodity. Deforestation negates the very purpose of green umbrella.

The concept it to utilise reusable (recyclable) waste material to reduce environmental pollution and simultaneously to make manufactured product that could add to the national income and help generate employment.

United States patent number US 4989916 suggests that a pouffe (a backless seat or footrest) can be formed by placing one or more tires on a base and covering the tires in upholstery with padding at predetermined locations between the tire and the upholstery. US 4989916 does not disclose forming other items of furniture or decorative items from tires. Further, US 4989916 does not suggest any procedure by which tires suitable for use to form furniture or decorative items can be selected or prepared.

It is the object of this invention to prepare durable furniture with the help of tire and tube wastes and thereby reduce the cost considerably.

To achieve the said objective, this invention provides a process of preparing furniture and decorative items comprising of at least one waste rubber tire and waste, tire tube, wherein the processing steps are characterised by selecting the tires and tube or allied wastes having predetermined strength; cleaning and treating the said tires and tube chemically to make it eco-friendly, fixing at least one said tire with or without tube on a base plate,
providing a layer of foam or a cushion of appropriate thickness, provided optionally with upholstery and placed in the middle opening of the uppermost one of at least one rubber tire.

Preferably, this invention provides the following further features.

The said tire and tubes are polished.

One or more half or quarter tire are fixed on a base tire to provide arms and the back of predetermined height to the said base for making a chair.

The seats, sofa, chair are covered with appropriate material to give attractive look.

The sofa of say 4 seats, 4 tires/tubes fixed on the base plate and four subsections of said tires are enjoined to the former to provide the arms and back rests.

The base plate is made of wood, plastic or any other strong metal sheet capable of bearing the load of the said tires.

To make the furniture easily movable from one place to the other, wheels are provided at the bottom of the base plate, alternatively, legs are provided at the base plate to achieve the desired height of the furniture.

Two or more tires may be fixed to the base plate one above the other for making the furniture of desired height.

That a piece of cleaned and polished waste material may be connected to the base plate/platform and other pieces of similar characteristics placed, stacked or enjoined together one on top of the other or individually to form into a piece of furniture.

A sealing plate/disc is placed at the base of the tire to act as a planter/flowerpot.

A sealing plate/disc is placed at the base plate/platform having a glass disc on top.

That base plate/platform is provided with wheels, the capacity of the said base plate/platform can be made to hold multiple seats or individual seat and can be fixed with segments of other tires on top to provide arms, back/headrests.

The structure for holding plants comprises a tire, one end of the tire being sealed with a base plate to hold earth, preferably a plastic base plate. This structure may be mounted on an assembly having wheels for mobility of the said structure. This structure holds plants, saplings, greens for indoor as well as outdoor decorations, arrangements and exhibitions. Also, this cavity by itself can hold flowerpots made of earth, plastic or metal with flowers, foliage, etc.

Similarly, a table structure can be made using one or more tires. The said table comprises one or more tires fixed one on top of the other by any conventional means. The said assembly of the tires is mounted on platform which may or may not be provided with wheels. The cavities of the tire may be filled with packing material. A glass or wooden plate of desired shape and thickness is placed on top to act as a table top. This said plate can be replaced by a raised cushion to act as seat and be suitably upholstered as per the requirements.

The base of the cavity has a small round disc of plastic/wood/metal. The base plate is made of wood, plastic or any other strong metal sheet capable of bearing the load of tires and tube or allied wastes.

To make the furniture easily movable from one place to the other, wheels are provided at the bottom of the said base plate. Alternatively, legs of predetermined height are provided at the bottom of base to achieve the desired height of the furniture.

Two or more tires and tubes, or allied wastes may be fixed to the base plate one above the other for making the furniture of desired height.

The present invention will now be described with reference to the accompanying drawings.
Figures 1a & 1B illustrates a backless single sofa;
Figures 2a & 2b illustrates a table with a glass or a wooden table top;
Figures 3a & 3b illustrates a single seat sofa with one tyre segment at the back;
Figures 4a & 4b illustrates a planter.

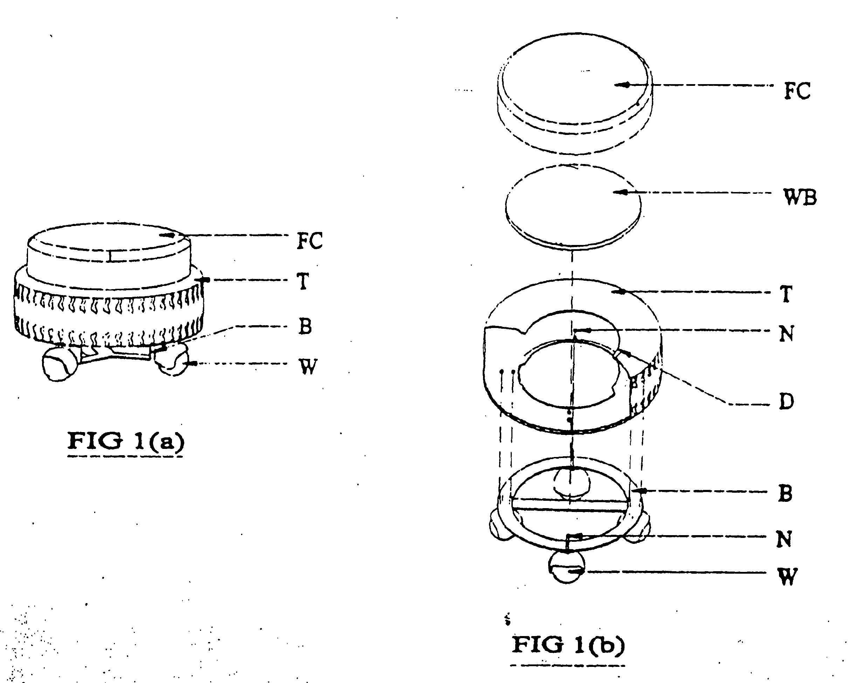

Referring to the drawings, Figures 1a & 1b show a single tire backless sofa. The said article of furniture comprises a single tire piece T. The tire is enjoined on a base plate B. The open end of the tire is sealed with a base WB with any conventional means N. A round cushion (FC) preferably having a diameter less than that of the inner diameter D and having a predetermined thickness is placed within the tire. One or more wheels W may be attached to the base plate B to make the sofa movable. Also to raise the height of the sofa, more than one tire may be used. The cushion may be upholstered.

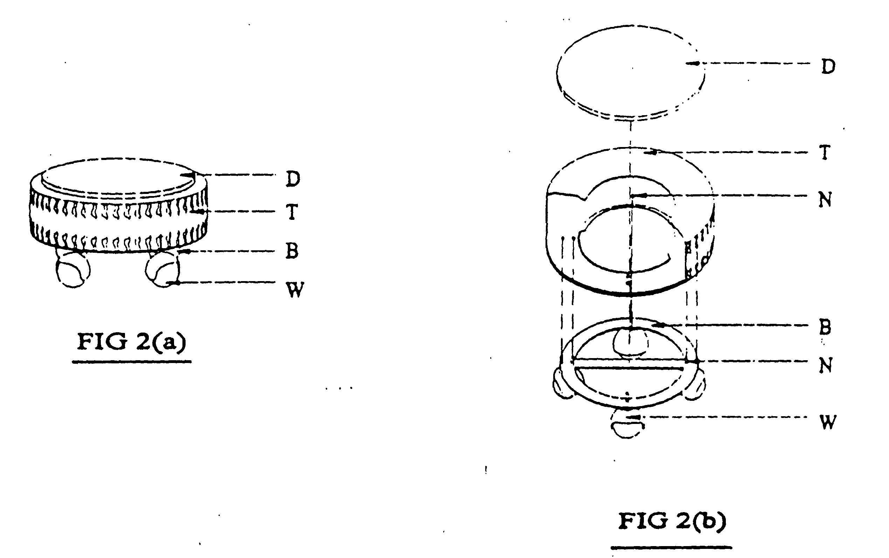

Figures 2a & 2b illustrates a round table comprising a single tire T enjoined on a base plate B by any conventional means N. A table top D is placed on the opposite end of the tire. The said table top may be of glass. One or more wheels W may be attached to the base plate B to make the table moveable. Also to raise the height of the table, more than one tire may be used.

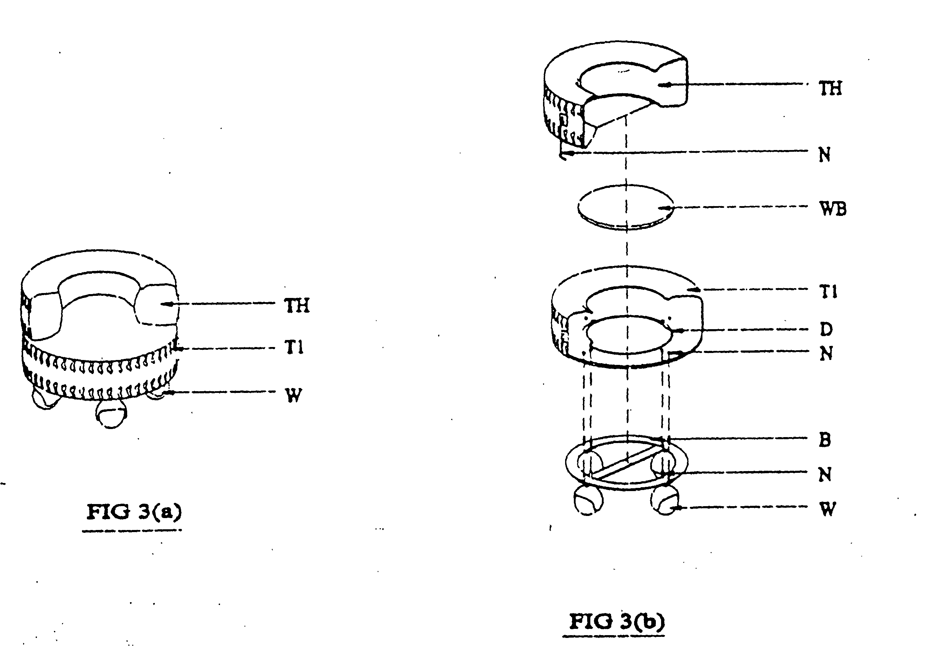

Figures 3a & 3b illustrate a single seat sofa comprising of tire T1 and a tire segment TH. A cushion may be placed on the tire T1. The tire segment is placed on top of the tire T1 adjoined thereto by conventional means N. The said assembly of T1 and TH are enjoined on a base plate B with any conventional means N. One or more wheels W may be attached to the base plate B to make the sofa movable. A wooden base WB having a diameter more than the inner diameter D of the tire is placed within the tire T1. The tire segment TH is then attached by any conventional means on tire T1 and the said wooden base WB.

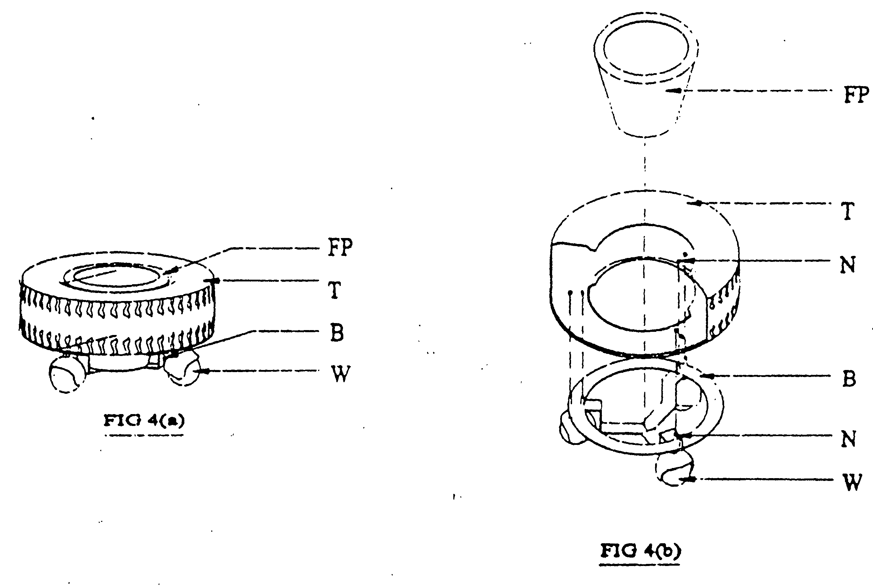

Figures 4a & 4b illustrate a flower pot holder comprising of tire T, said tire is enjoined to a base plate B with any conventional means N. One or more wheels W may be attached to the base plate B to make the pot holder movable. The base of the cavity of tire T has been sealed with a plate preferably made of wood or plastic to hold the pot.

In yet another embodiment of the invention, the cavity within the tire T can also hold flowerpots FP made of earth, plastic or metal with flowers, foliage, etc..

Such a decorative piece can be placed by the side of a sofa or in a drawing rooms, lobbies or verandah, terrace, lawns, etc..

All items are fixed to the base plate P with nut bolts and the base plate is mounted on wheels (W) for easy movement.

There alternate embodiments are all by way of explanation and do not intend to limit the scope of the invention.

## Claims

1. A process of preparing furniture and decorative items comprising of at least one waste rubber tire and waste, tire tube, wherein the processing steps are **characterised by**:-
- selecting the tires and tube (T) or allied wastes having predetermined strength;
- cleaning and treating the said tires and tube chemically to make it eco-friendly,
- fixing at least one said tire with or without tube on a base plate (B),
- providing a layer of foam or a cushion (FC) of appropriate thickness, provided optionally with upholstery and placed in the middle opening of the uppermost one of at least one rubber tire.

2. A process as claimed in claim 1 further comprising polishing the said tires and tubes before fixing to the said base plate.

3. A process as claimed in claim 1 further comprising cutting one or more of rubber tires into half or quarter section (TH) and fixing to a base tire (T₁) on the said base plate to provide arms and the back of predetermined height, for making a single seat sofa assembly.

4. A process as claimed in claim 1 further comprising in covering the furniture items with appropriate material to give attractive look.

5. A process as claimed in claim 1 further comprising fixing of four tires with or without tubes on the base plate and four subsections of said tires being enjoined to the former to provide the arms and back rests for the purpose of preparing a four seater sofa.

6. A process as claimed in claim 1 wherein the said base plate is made of a material selected from group consisting of wood, plastic or any other strong metal sheet capable of bearing the load of the said tires.

7. A process as claimed in claim 1 further comprising affixing of movable means such as wheels (W) or legs with wheels or a platform with wheels to the bottom of the said base plate to make the furniture item movable.

8. A process as claimed in claim 1 wherein two or more tyres may be fixed to the base plate one above the other, for making the furniture of desired height.

9. An article of furniture comprising at least one waste rubber tire and waste, tire tube, and **characterised by** being produced by the processing steps of:
- selecting the tires and tube (T) or allied wastes having predetermined strength;
- cleaning and treating the said tires and tube chemically to make it eco-friendly;
- fixing at least one said tire with or without tube on a base plate (B);
- providing a layer of foam or a cushion (FC) of appropriate thickness, provided optionally with upholstery and placed in the middle opening of the uppermost one of at least one rubber tire.

10. An article of furniture as claimed in claim 9 wherein a piece of cleaned and polished waste tire (T) is affixed to the base plate (B) and other pieces of similar characteristics placed, stacked or enjoined together, one on top of the other or individually to form into a piece of furniture.

11. An article of furniture as claimed in claim 9 wherein a sealing plate or disc is placed at the base of the tire to act as a planter or flowerpot.

12. An article of furniture as claimed in claim 9 wherein the said tire (T) on a base plate (B) with movable means (W) is provided with glass disc (D) on top to form a table with glass top.

13. An article as claimed in claim 9 wherein the base plate (B) is provided with wheels (W), the article providing multiple seats or an individual seat and segments (TH) of other tires being fixed on top to provide arm or back rests.

## Patentansprüche

1. Verfahren zum Herstellen von Möbeln und dekorativen Gegenständen umfassend mindestens einen Altgummireifen und Altreifenschlauch, wobei die Verarbeitungsschritte **gekennzeichnet, sind durch**:
- das Auswählen der Reifen und des Schlauchs (T) oder verwandter Abfallstoffe, die eine vorbestimmte Festigkeit aufweisen;
- das chemische Reinigen und Behandeln der Reifen und des Schlauchs, um ihn umweltfreundlich zu machen,
- das Befestigen mindestens eines der Reifen mit oder ohne Schlauch auf einer Grundplatte (B),
- das Bereitstellen einer Schicht Schaum oder eines Kissens (FC) entsprechender Dicke, die/das wahlweise mit einer Polsterung ausgestattet ist und in die mittlere Öffnung des obersten von mindestens einem Gummireifen positioniert wird.

2. Verfahren nach Anspruch 1, das des Weiteren das Polieren der Reifen und Schläuche vor dem Befestigen auf der Grundplatte umfasst.

3. Verfahren nach Anspruch 1, des Weiteren umfassend das Schneiden eines oder mehrerer Gummireifen in die Hälfte oder in Viertel (TH) und das Befestigen an einen Grundreifen (T₁) auf der Grundplatte zum Bereitstellen von Armen und dem Rücken vorbestimmen Höhe zur Herstellung eines Einsitzersotasystems.

4. Verfahren nach Anspruch 1, des Weiteren umfassend das Bedecken der Möbelstücke mit geeignetem Material zur Erzielung eines attraktiven Aussehens.

5. Verfahren nach Anspruch 1, des Weiteren umfassend das Befestigen von vier Reifen mit oder ohne Schläuchen auf der Grundplatte, wobei vier Unterabschnitte der Reifen mit ersterem verbunden werden unter Bereitstellung der Arme und der Rückenlehnen zum Zweck des Herstellens eines Viersitzersofas.

6. Verfahren nach Anspruch 1, wobei die Grundplatte aus einem Material hergestellt ist ausgewählt der Gruppe bestehend aus Holz, Kunststoff oder irgend einer starken Metallplatte, die in der Lage ist, das Gewicht des Reifens zu tragen.

7. Verfahren nach Anspruch 1 des Weiteren umfassend das Befestigen einer beweglichen Vorrichtung wie Rädern (W) oder Beinen mit Rädern oder einer Plattform mit Rädern unten an der Grundplatte, um die Möbelstücke beweglich zu machen.

8. Verfahren nach Anspruch 1, wobei zwei oder mehr Reifen einer über dem anderen an der Grundpatte zum Herstellen des Möbelstücks der erwünschten Höhe befestigt werden können.

9. Möbelstück umfassend mindestens einen Altgummireifen und Altreifenschlauch, **dadurch gekennzeichnet, dass** er durch folgende verarbeitungsschritte hergestellt wird:
- das Auswählen der Reifen und des Schlauchs (T) oder verwandter Abfallstoffe, die eine vorbestimmte Festigkeit aufweisen;
- das chemische Reinigen und Behandeln der Reifen und des Schlauchs, um ihn umweltfreundlich zu machen,
- das Befestigen mindestens eines der Reifen mit oder ohne Schlauch auf einer Grundplatte (B),
- das Bereitstellen einer Schicht Schaum oder eines Kissens (FC) entsprechender Dicke, die/das wahlweise mit einer Polsterung ausgestattet ist und in die mittlere Öffnung des obersten von mindestens einem Gummireifen positioniert, wird.

10. Möbelstück nach Anspruch 9, wobei ein Stück gereinigter und polierter Altreifen (T) auf der Grundplatte (B) befestigt wird und andere Stücke ähnlicher charakteristischer Eigenschaften, eines auf das andere oder einzeln, unter Bildung eines Möbelstücks positioniert, gestapelt oder miteinander verbunden werden.

11. Möbelstück nach Anspruch 9, wobei eine Abdichtplatte oder -scheibe unten an dem Reifen positioniert wird, um als Pflanzen- oder Blumentopf zu dienen.

12. Möbelstück nach Anspruch 9, wobei der Reifen (T) auf der Grundplatte (B) mit beweglichen Vorrichtungen (W) mit einer Glasscheibe (D) oben ausgestattet wird unter Bildung eines Tisches mit Glasplatte.

13. Möbelstück nach Anspruch 9, wobei die Grundplatte (B) mit Rädern (W) ausgestattet ist, wobei das Möbelstück mehrere Sitze oder einen Einzelsitz und Segmente (TH) anderer Reifen oben zum Bieten von Arm- oder Rückenlehnen befestigt werden.

## Revendications

1. procédé de préparation de mobilier et d'articles décoratifs comprenant au moins un pneu en caoutchouc de rejet et une chambre pneumatique de rejet, dans lequel les étapes de traitement sont **caractérisées :**
**par** la sélection des pneus et de la chambre pneumatique (T) ou de déchets associés ayant une solidité prédéterminée ;
- par le nettoyage et le traitement desdits pneus et de ladite chambre pneumatique par voie chimique pour les rendre conviviaux vis-à-vis de l'environnement,
- par la fixation d'au moins un dit pneu avec ou sans chambre pneumatique sur une plaque de base (B),
- par la fourniture d'une couche de mousse ou d'un coussin (FC) d'épaisseur appropriée, muni, en option, de rembourrage et placé dans l'ouverture médiane du plus élevé d'au moins un pneu en caoutchouc.

2. Procédé selon la revendication 1 , comprenant en outre le polissage desdits pneus et desdites chambrer pneumatiques avant la fixation à ladite plaque de base.

3. Procédé selon la revendication 1, comprenant en outre la coupe d'un ou de plusieurs pneus en caoutchouc en section d'une moitié ou d'un quart (TH) et la fixation à un pneu de base (T₁) sur ladite plaque de base pour fournir des bras et le dos d'une hauteur prédéterminée en vue de réaliser un ensemble de sofa à siège unique.

4. Procédé selon la revendication 1, comprenant en outre la couverture des articles de mobilier à l'aide d'un matériau approprié pour leur donner un aspect attirant.

5. Procédé selon la revendication 1, comprenant en outre la fixation de quatre pneus avec ou sans chambres pneumatiques, sur la plaque de base et la jonction de quatre sous-sections desdits pneus à cette dernière pour fournir des appuis pour les bras et pour le dos dans l'objectif de préparation d'un sofa à quatre sièges.

6. Procédé selon la revendication 1, dans lequel ladite plaque de base est faite d'un matériau sélectionné parmi le groupe constitué du bois, de matière plastique ou d'une feuille métallique forte quelconque capable de supporter la charge desdits pneus.

7. Procédé selon la revendication 1, comprenant en outre la fixation d'un moyen mobile tel que des roues (W) ou de jambes avec roues ou d'une plate-forme avec des roues au fond de ladite plaque de base pour rendre l'article de mobilier mobile.

8. Procédé selon la revendication 1, dans lequel deux pneus ou plus peuvent être fixés à la plaque de base l'un au dessus de l'autre, pour en faire un mobilier d'une hauteur désirée.

9. Article de mobilier comprenant au moins un pneu en caoutchouc de rejet et une chambre pneumatique de rejet et **caractérisé par** le fait d'être produit par l'intermédiaire des étapes de traitement :
- de sélection des pneus et de la chambre pneumatique (T) ou de déchets associés ayant une solidité prédéterminée ;
- de nettoyage et de traitement desdits pneus et de ladite chambre pneumatique par voie chimique pour les rendre conviviaux vis-à-vis de l'environnement,
- de fixation d'au moins un dit pneu avec ou sans chambre pneumatique sur une plaque de base (B),
- de fourniture d'une couche de mousse ou d'un coussin (FC) d'une épaisseur appropriée, munie en option de rembourrage et placée dans l'ouverture médiane du plus élevé d'au moins un pneu en caoutchouc.

10. Article de mobilier, selon la revendication 9, dans lequel une pièce de pneu de rejet nettoyée et polie (T) est fixée sur la plaque de base (P.) et dans lequel d'autres pièces de caractéristiques similaires sont placées, empilées ou jointes ensemble, l'une au-dessus de l'autre ou de manière individuelle, pour former un article de mobilier.

11. Article de mobilier, selon la revendication 9, dans lequel une plaque ou un disque de scellement est placé à la base du pneu pour agir en tant que semoir ou pot à fleurs.

12. Article de mobilier selon la revendication 9, dans lequel ledit pneu (T) sur une plaque de base (B) avec des moyens mobiles (W) est muni d'un disque en verre (D) au dessus pour former une table avec un dessus en verre.

13. Article selon la revendication 9, dans lequel la plaque de base (B) est munie de roues (W), l'article mettant à disposition des sièges multiples ou un siège individuel et des segments (TH) d'autres pneus étant fixés par dessus pour mettre à disposition des appuis pour les bras ou pour le dos.
